# EUROPÄISCHE PATENTSCHRIFT

(11) **EP 3 468 841 B1**
(45) Veröffentlichungstag und Bekanntmachung des Hinweises auf die Patenterteilung: **07.10.2020**
(21) Anmeldenummer: 17730439.1
(22) Anmeldetag: 09.06.2017
(51) Int. Cl.: B60R 7/04

(54) **RÜCKENLEHNE EINES FAHRZEUGSITZES MIT EINER TASCHE**
BACKREST OF A VEHICLE SEAT WITH A POCKET
DOSSIER DE SIÈGE DE VÉHICULE AVEC UNE POCHE

(30) Priorität: 09.06.2016 DE 102016210197
(43) Veröffentlichungstag der Anmeldung: 17.04.2019
(73) Patentinhaber: Volkswagen Aktiengesellschaft, 38440 Wolfsburg (DE)
(72) Erfinder: LINDHORST, Volker, 38104 Braunschweig (DE)
(86) Internationale Anmeldenummer: PCT/EP2017/064053
(87) Internationale Veröffentlichungsnummer: WO 2017/212003

(56) Entgegenhaltungen:
- JP-A- 2013 082 452
- JP-U- S58 118 050
- JP-U- S58 184 355
- JP-U- S63 175 454

## Beschreibung

Die Erfindung betrifft eine Rückenlehne eines Fahrzeugsitzes mit einer Tasche mit den Merkmalen gemäß den Patentansprüchen.

Beispielsweise ist gemäß der DE 100 36 065 A1 eine Rückenlehne eines Fahrzeugsitzes Stand der Technik. An der Rückwand der Rückenlehne ist eine Tasche angeordnet. Die Tasche wird durch die Rückenlehne und einen Deckel gebildet. Die Unterkante des Deckels ist mit der Rückenlehne verbunden. Der Deckel ist an beiden Seiten durch jeweils ein Seitenteil mit der Rückenlehne verbunden. Die Seitenteile bestehen aus einem flexiblen Material. Die Tasche öffnet folglich im Bereich der Oberkante des Deckels, wobei der Deckel bei einem Öffnen oder einem Schließen der Tasche um eine Drehachse im Bereich der Unterkante des Deckels verdreht wird. Wenn der in der Tasche aufzubewahrende Gegenstand vergleichsweise dick ist, wird der Deckel im Bereich der Oberkante weit geöffnet. Ein gewisser Ausgleich des so entstehenden ungleichmäßigen Umfassens des aufzubewahrenden Gegenstandes durch die Tasche erfolgt durch die aus dem flexiblen Material bestehenden Seitenteile. Jedoch ist dann der Deckel gegenüber dem Fahrzeugsitz instabil. Das ist insbesondere dann der Fall, wenn der Deckel nicht aus einem flexiblen Material besteht, sondern es sich um einen so genannten festen Deckel handelt, der formstabil ausgeführt ist. Ein solcher fester Deckel wird als besonders attraktiv und hochwertig angesehen.

Die Instabilität eines insbesondere festen Deckels einer solchen Tasche kann auch nicht durch elastische Elemente im Bereich der flexiblen Seitenteile zufriedenstellend verhindert werden, wie sie zum Beispiel gemäß der DE 10 2005 041 935 A1 vorgeschlagen werden.

JP S58 118050 U, JP S63 175454 U, JP 2013 082452 A offenbaren jeweils eine Rückenlehne eines Fahrzeugsitzes mit einer Tasche. Die Tasche wird durch eine Rückenlehne und einen Deckel gebildet, wobei sich im Bereich der Unterkante des Deckels eine Drehachse des Deckels befindet. Die Drehachse ist hinsichtlich ihres Abstandes gegenüber der Rückenlehne verlagerbar.

JP S58 184355 U offenbart eine Rückenlehne eines Fahrzeugsitzes mit einer Tasche. Die Tasche wird durch die Rückenlehne und einen Deckel gebildet. Der Deckel wirkt mit Federelementen zusammen, die eine Verlagerung des Deckels im Bereich seiner Anlenkung an die Rückenlehne gestatten.

Der Erfindung liegt nun die Aufgabe zugrunde, die Anordnung des Deckels einer an einer Rückenlehne eines Fahrzeugsitzes angeordneten Tasche derart stabil zu gestalten, dass der Deckel gegenüber dem Fahrzeugsitz, unabhängig von der Dicke des jeweils in der Tasche aufzubewahrenden Gegenstandes, stets stabil positioniert ist.

Diese Aufgabe wird durch die Merkmale des Anspruchs 1 gelöst. Dabei wird die im Bereich der Unterkante des Deckels befindliche Drehachse des Deckels ausgelenkt, wenn ein Gegenstand in der Tasche aufbewahrt wird. Wie schon im Zusammenhang mit der Würdigung des Standes der Technik beschrieben, öffnet die Tasche im Bereich der Oberkante des Deckels, wobei der Deckel bei einem Öffnen oder einem Schließen der Tasche um eine Drehachse im Bereich der Unterkante des Deckels verdreht wird. Erfindungsgemäß ist diese im Bereich der Unterkante des Deckels gebildete Drehachse, um die der Deckel geschwenkt wird, wenn ein Gegenstand in der Tasche aufbewahrt wird, hinsichtlich ihres Abstandes gegenüber dem Fahrzeugsitz beziehungsweise der Rückenlehne variabel. Erfindungsgemäß ist die Drehachse geführt verlagerbar. Die Drehachse weist dann einen anderen, insbesondere einen größeren Abstand gegenüber dem Fahrzeugsitz auf, wenn die Drehachse verlagert wurde, infolge des Einbringens eines Gegenstandes in der Tasche, für eine Aufbewahrung, insbesondere eines vergleichsweise dicken Gegenstandes, als vor dem Einbringen dieses Gegenstandes beziehungsweise vor der Verlagerung der Drehachse. Insbesondere ist die Drehachse auch dann parallel gegenüber dem Fahrzeugsitz, wenn die Drehachse verlagert wurde, jedoch mit einem veränderten, insbesondere größeren Abstand gegenüber dem Fahrzeugsitz. Dadurch, dass die Drehachse gegenüber dem Fahrzeugsitz hinsichtlich des Abstandes einstellbar ist, erfolgt erfindungsgemäß einerseits ein Ausgleich des Abstandes zwischen Deckel und Rückenlehne und der aufzubewahrende Gegenstand wird gleichmäßig umfasst. Andererseits wird der Deckel durch die zur Auslenkung/Verlagerung der Drehachse des Deckels vorgesehenen Mittel stabilisiert.

Die Erfindung sieht hierzu vor, dass die im Bereich der Unterkante des Deckels befindliche Drehachse des Deckels dadurch ausgelenkt beziehungsweise hinsichtlich ihres Abstandes gegenüber der Rückenlehne variiert wird, dass der Deckel mit einer Vielzahl von Federelementen zusammenwirkt. Diese Federelemente sind zwischen dem Deckel und der Rückenlehne/der rückseitigen Lehnenabdeckung des Fahrzeugsitzes angeordnet. Diese Federelemente sind an der der Rückenlehne zugewandten Seite des Deckels mit dem Deckel, mit der Rückenlehne sowie untereinander verbunden. Die auf diese Weise miteinander verbundenen Federelemente wirken mit der Rückenlehne und dem Deckel derart zusammen, wenn ein in der Tasche aufzubewahrender Gegenstand in die Tasche eingebracht wird, dass der Deckel zunächst gegen die Federwirkung eines ersten Federelementes von der Rückenlehne abgehoben wird. Dabei wird der Deckel um die im Bereich der Unterkante des Deckels befindliche Drehachse geschwenkt. Der Deckel stützt sich zunächst im Bereich der Unterkante des Deckels an der Rückenlehne ab. Im weiteren Verlauf des Öffnungsvorganges wird der Deckel zusätzlich gegen die Federwirkung eines weiteren Federelementes von der Rückenlehne abgehoben, so dass die Drehachse des Deckels verlagert wird beziehungsweise der Abstand der Drehachse des Deckels gegenüber der Rückenlehne verändert/vergrößert wird. Die hierbei eingesetzten Federelemente üben eine sehr gleichmäßige und gut verteilte Haltekraft auf den in der Tasche aufzubewahrenden Gegenstand aus. Bevorzugt werden Biegefedern verwendet, die leicht sind und wenig Bauraum benötigen. Die Montage und Positionierung der Federelemente ist sehr einfach. Durch die durch die Federelemente auf den Deckel wirkenden Kräfte erfolgt ferner eine stabile Führung der Verlagerung der Drehachse des Deckels.

Eine bevorzugte Ausgestaltung der Erfindung ergibt sich aus den, in dem Unteranspruch genannten Merkmalen.

Die Erfindung wird nachfolgend in Ausführungsbeispielen anhand der zugehörigen Zeichnungen erläutert. Es zeigen:
- Figur 1: eine erste Ausführungsform einer Tasche mit einem Doppelgelenk,
- Figur 2: eine weitere Ausführungsform einer Tasche mit einem Federelement, und
- Figur 3: eine erfindungsgemäße Ausführungsform mit mehreren Federelementen.

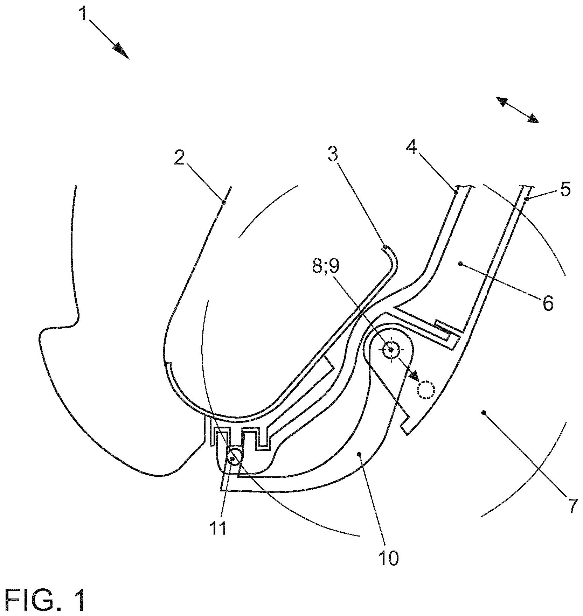

Figur 1 zeigt einen Fahrzeugsitz 1 in einer Ansicht von der Seite mit einer Rückenlehne 2, einem Lehnenrahmen 3 und einer Lehnenabdeckung 4. Die Lehnenabdeckung 4 ist an der rückwärtigen Seite der Rückenlehne 2 angeordnet. Der Fahrzeugsitz 1 weist, wie allgemein bekannt, eine Sitz- und Lehnenfläche beziehungsweise eine Polsterung auf, was jedoch nicht gezeigt ist. Ein solcher Fahrzeugsitz 1 kann in jedem möglichen Fahrzeug eingesetzt werden, sei es ein Automobil, ein Flugzeug oder ein Boot. Durch das Zusammenwirken der Lehnenabdeckung 4 und eines Deckels 5 wird eine Tasche 6 gebildet. Der Deckel 5 ist bevorzugt formstabil, also handelt es sich um einen so genannten festen Deckel 5. Die Tasche 6 ist quasi ein gewisser Hohlraum zwischen Lehnenabdeckung 4 und Deckel 5. Im Bereich der Unterkante 7 des Deckels 5 befindet sich die Drehachse 8 des Deckels 5. Bei einem Öffnen oder Schließen der Tasche 6 wird der Deckel 5 um die Drehachse 8 verdreht. Ein Öffnen oder Schließen der Tasche 6 ist durch einen Doppelpfeil angedeutet. Der Deckel 5 ist im Bereich seiner Unterkante 7 mit einem Mehrfachgelenk/Doppelgelenk verbunden. Das Mehrfachgelenk/Doppelgelenk ist wiederum mit dem Fahrzeugsitz 1, insbesondere der Rückenlehne 2 verbunden. Der Deckel 5 ist im Bereich seiner Unterkante 7 mit einem ersten Gelenk 9 einer Schwinge 10 des Doppelgelenkes drehbeweglich verbunden und der Fahrzeugsitz 1 ist mit einem zweiten Gelenk 11 der Schwinge 10 drehbeweglich verbunden. Das erste Gelenk 9 entspricht hierbei der Drehachse 8, das heißt, die Drehachse des ersten Gelenks 9 entspricht der Drehachse 8 des Deckels 5. Gemäß Figur 1 ist der Fahrzeugsitz 1 dadurch mit dem zweiten Gelenk 11 der Schwinge 10 verbunden, so dass das zweite Gelenk 11 an der Lehnenabdeckung 4 befestigt ist, welche wiederum mit dem Fahrzeugsitz 1 verbunden ist. Alternativ kann das zweite Gelenk 11 auch mit dem Lehnenrahmen 3 beziehungsweise der Rückenlehne 2 verbunden sein. Erfolgt ein Öffnen der Tasche 6 durch ein Abheben des Deckels 5 vom Fahrzeugsitz 1 beziehungsweise von der Lehnenabdeckung 4, dann wird der Deckel 5 zunächst um die Drehachse 8 verdreht. Wird der Öffnungsvorgang fortgeführt, etwa weil ein vergleichsweise dicker Gegenstand in die Tasche 6 eingebracht werden soll, für eine Aufbewahrung, dann erfolgt ein Auslenken der Schwinge 10 und somit ein Auslenken der Drehachse 8 des Deckels 5/des ersten Gelenkes 9 beziehungsweise eine Veränderung/Vergrößerung des Abstandes der Drehachse 8 des Deckels 5 vom Fahrzeugsitz 1, da die Schwinge 10 um das zweite Gelenk 11 verdreht wird. Mittels des einfachen Pfeils in Figur 1 ist das Verlagern der Drehachse 8 angedeutet (gestrichelter Kreis). Das Einsetzen des Auslenkens der Schwinge 10 während eines Öffnungsvorgangs der Tasche 6 kann beispielsweise mittels eines Vorsprungs gesteuert werden, der an der dem Fahrzeugsitz 1 zugewandten Seite des Deckels angeordnet ist und in einen weiteren Vorsprung eingreift, der an der dem Deckel 5 zugewandten Seite des Fahrzeugsitzes 1/der Lehnenabdeckung 4 angeordnet ist. Durch die Dimensionierung der Schwinge 10, also der Länge der Schwinge 10, kann auf einfache Weise bei der Konstruktion der gewünschte maximal mögliche Abstand des Deckels 5 von dem Fahrzeugsitz 1/der Lehnenabdeckung 4 eingestellt werden. Das kann auch mit Seitenteilen erfolgen, die in Figur 1 nicht gezeigt sind und die wie gemäß dem Stand der Technik bekannt, an den beiden Seitenkanten des Deckels 5 von dessen Oberkante zu dessen Unterkante verlaufen.

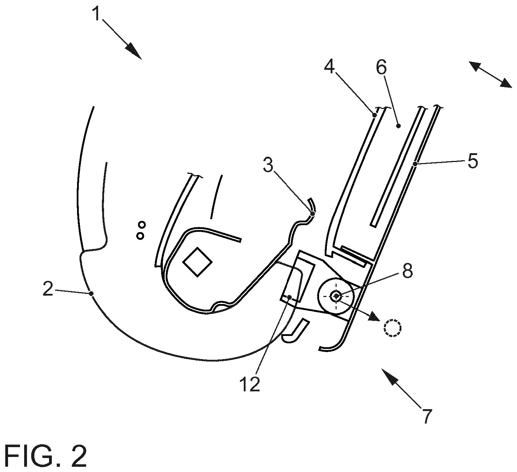

Wie in Figur 2 gezeigt, kann alternativ vorgesehen werden, dass die im Bereich der Unterkante 7 des Deckels 5 befindliche Drehachse 8 des Deckels 5 dadurch ausgelenkt beziehungsweise hinsichtlich ihres Abstandes gegenüber dem Fahrzeugsitz 1/der Rückenlehne 2 variiert wird, dass der Deckel 5 im Bereich seiner Unterkante 7 drehbeweglich an einem Federelement 12 angeordnet ist. Das Federelement 12 ist bevorzugt ein Federband beziehungsweise eine langgestreckte Biegefeder. Das Federelement 12 weist bevorzugt mehrere in Richtung des Deckels 5 vorspringende Fortsätze auf, die wiederum mit bevorzugt mehreren in Richtung des Fahrzeugsitzes 1 vorspringenden Fortsätzen zusammenwirken, die an dem Deckel 5 angeordnet sind, so dass ein Drehgelenk gebildet wird, durch das die Drehachse 8 des Deckels 5 verläuft. Das Federelement 12 ist derart am Fahrzeugsitz 1 beziehungsweise der Rückenlehne 2 angeordnet, dass entgegen der Federwirkung des Federelementes 12 der Abstand zwischen Fahrzeugsitz 1 und Deckel 5 verändert werden kann. Wird, wie durch den Doppelpfeil angedeutet, der Deckel 5 geöffnet, dann wird der Deckel 5 so lange um die Drehachse 8 geschwenkt, dass der Deckel 5 im Bereich seiner Unterkante 7 in Kontakt mit dem Fahrzeugsitz 1 gebracht wird und ein weiteres Öffnen des Deckels 5 nur noch gegen die Federwirkung des Federelementes 12 möglich ist, wobei sich der Deckel 5 im Bereich seiner Unterkante 7 an dem Fahrzeugsitz 1 abstützt und das Federelement 12 in Richtung des Deckels 5 ausgelenkt wird, so dass die Drehachse 8 verlagert wird beziehungsweise der Abstand der Drehachse 8 gegenüber dem Fahrzeugsitz 1 verändert/vergrößert wird. Das ist in Figur 2 mittels des einfachen Pfeils gezeigt (gestrichelter Kreis). Das Federelement 12 ist bevorzugt horizontal im unteren Bereich des Fahrzeugsitzes 1 beziehungsweise der Rückenlehne 2 angeordnet.

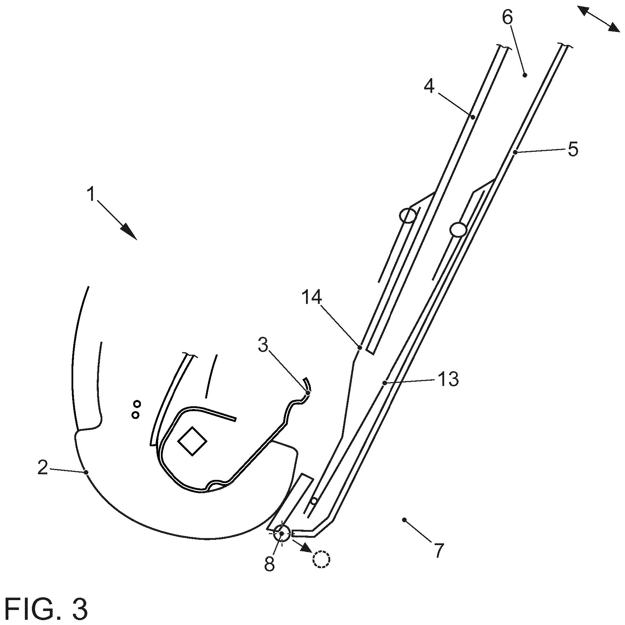

Figur 3 zeigt eine erfindungsgemäße Ausgestaltung der Erfindung. Hierbei ist vorgesehen, dass die im Bereich der Unterkante 7 des Deckels 5 befindliche Drehachse 8 des Deckels 5 dadurch ausgelenkt beziehungsweise hinsichtlich ihres Abstandes gegenüber der Rückenlehne 2 variiert wird, dass der Deckel 5 mit einer Vielzahl von Federelementen 13, 14 zusammenwirkt. Diese Federelemente 13, 14 sind zwischen dem Deckel 5 und der Rückenlehne 2/der rückseitigen Lehnenabdeckung 4 des Fahrzeugsitzes 1 angeordnet. Zumindest ein dem Deckel 5 zugewandtes/zugeordnetes erstes Federelement 13 erstreckt sich am Deckel 5 entlang im Bereich zwischen der Unterkante 7 des Deckels 5 und der Oberkante des Deckels 5 und ist am Deckel 5, bevorzugt drehbeweglich/schwenkbeweglich, befestigt. Zumindest ein der Rückenlehne 2/der Lehnenabdeckung 4 zugewandtes/zugeordnetes weiteres Federelement 14 erstreckt sich im Bereich zwischen der Unterkante und der Oberkante der Rückenlehne 2/der Lehnenabdeckung 4 entlang des Fahrzeugsitzes 1, wobei dieses Federelement 14 die Lehnenabdeckung 4 durch einen Durchbruch in der Lehnenabdeckung 4 durchdringt und im Inneren der Rückenlehne 2/an der der Rückenlehne 2 zugewandten Seite der Lehnenabdeckung 4, bevorzugt drehbeweglich/schwenkbeweglich, befestigt ist. Das weitere Federelement 14 ist bevorzugt gekröpft ausgeführt, so dass es die Lehnenabdeckung 4 durchdringen kann. Das erste Federelement 13 ist mit dem weiteren Federelement 14 im Bereich der Unterkante 7 des Deckels 5 zwischen Lehnenabdeckung 4 und Deckel 5, bevorzugt nicht drehbar/schwenkbar, verbunden. Die auf diese Weise miteinander verbundenen Federelemente 13, 14 wirken mit der Rückenlehne 2 und dem Deckel 5 derart zusammen, wenn ein in der Tasche 6 aufzubewahrender Gegenstand in die Tasche 6 eingebracht wird, dass der Deckel 5 zunächst gegen die Federwirkung des ersten Federelementes 13 von der Rückenlehne 2/der Lehnenabdeckung 4 abgehoben wird, wie durch den Doppelpfeil in Figur 3 angedeutet ist, wobei der Deckel 5 um die im Bereich der Unterkante 7 des Deckels 5 befindliche Drehachse 8 geschwenkt wird und sich der Deckel 5 im Bereich der Unterkante 7 des Deckels 5 an der Rückenlehne 2/der Lehnenabdeckung 4 abstützt, wobei im weiteren Verlauf des Öffnungsvorganges der Deckel 5 zusätzlich gegen die Federwirkung des weiteren Federelementes 14 von der Rückenlehne 2/der Lehnenabdeckung 4 abgehoben wird, so dass die Drehachse 8 des Deckels 5 verlagert wird beziehungsweise der Abstand der Drehachse 8 des Deckels 5 gegenüber der Rückenlehne 2 verändert/vergrößert wird. Das ist in Figur 3 mittels des einfachen Pfeils gezeigt (gestrichelter Kreis). Dabei handelt es sich bei den Federelementen 13, 14 um gerade gestreckte Biegefedern beziehungsweise, Blattfedern, Flachfedern oder Federzungen.

## Patentansprüche

1. Rückenlehne (2) eines Fahrzeugsitzes (1) mit einer Tasche (6), wobei die Tasche (6) durch die Rückenlehne (2) und einen Deckel (5) gebildet wird, wobei sich im Bereich der Unterkante (7) des Deckels (5) eine Drehachse (8) des Deckels (5) befindet, wobei der Deckel (5) bei einem Öffnen oder einem Schließen der Tasche (6) um die Drehachse (8) geschwenkt wird, wobei
die Drehachse (8) hinsichtlich ihres Abstandes gegenüber der Rückenlehne (2) verlagerbar ist, so dass ein Ausgleich des Abstandes zwischen Deckel (5) und Rückenlehne (2) erfolgt, wenn ein Gegenstand in der Tasche (6) aufbewahrt wird,
**dadurch gekennzeichnet, dass**
der Deckel (5) mit einer Vielzahl von Federelementen (13, 14) zusammenwirkt, wobei diese Federelemente (13, 14) zwischen dem Deckel (5) und der Rückenlehne (2) angeordnet sind, wobei sich zumindest ein dem Deckel (5) zugeordnetes erstes Federelement (13) am Deckel (5) entlang, im Bereich zwischen der Unterkante (7) des Deckels (5) und der Oberkante des Deckels (5) erstreckt und am Deckel (5) befestigt ist und sich zumindest ein der Rückenlehne (2) zugeordnetes weiteres Federelement (14) an der Rückenlehne (2) entlang im Bereich zwischen der Unterkante und der Oberkante des der Rückenlehne (2) erstreckt, wobei das zumindest eine weitere Federelement (14) eine an der Rückenlehne (2) angeordnete Lehnenabdeckung (4) durch einen Durchbruch in der Lehnenabdeckung (4) durchdringt und im Inneren der Rückenlehne (2) befestigt ist, wobei das zumindest eine erste Federelement (13) mit dem zumindest einen weiteren Federelement (14) im Bereich der Unterkante (7) des Deckels (5) zwischen Lehnenabdeckung (4) und Deckel (5) verbunden ist, so dass wenn ein in der Tasche (6) aufzubewahrender Gegenstand in die Tasche (6) eingebracht wird, der Deckel (5) zunächst gegen die Federwirkung des zumindest einen ersten Federelementes (13) von der Rückenlehne (2) abgehoben wird, wobei der Deckel (5) um die im Bereich der Unterkante (7) des Deckels (5) befindliche Drehachse (8) geschwenkt wird und sich der Deckel (5) im Bereich der Unterkante (7) des Deckels (5) an der Rückenlehne (2) abstützt, wobei im weiteren Verlauf des Öffnungsvorganges der Deckel (5) zusätzlich gegen die Federwirkung des zumindest einen weiteren Federelementes (14) von der Rückenlehne (2) abgehoben wird, so dass die Drehachse (8) des Deckels (5) verlagert und der Abstand der Drehachse (8) des Deckels (5) gegenüber der Rückenlehne (2) verändert wird und dass das zumindest eine erste Federelement (13) und das zumindest eine weitere Federelement (14) jeweils eine gerade gestreckte Biegefeder ist.

2. Rückenlehne (2) nach Anspruch 1, **dadurch gekennzeichnet, dass** das zumindest eine weitere Federelement (14) gekröpft ausgeführt ist, so dass es die Lehnenabdeckung (4) durchdringen kann.

## Claims

1. Backrest (2) of a vehicle seat (1) with a pocket (6), wherein the pocket (6) is formed by the backrest (2) and a cover (5), wherein an axis of rotation (8) of the cover (5) is located in the region of the lower edge (7) of the cover (5), wherein the cover (5) is pivoted about the axis of rotation (8) when the pocket (6) is opened or closed, wherein
the axis of rotation (8) can be displaced with respect to its distance from the backrest (2) so that the distance between the cover (5) and the backrest (2) is adjusted when an object is stored in the pocket (6),
**characterized in that**
the cover (5) cooperates with a plurality of spring elements (13, 14), wherein said spring elements (13, 14) are disposed between the cover (5) and the backrest (2), wherein at least one first spring element (13) associated with the cover (5) extends along the cover (5) in the region between the lower edge (7) of the cover (5) and the upper edge of the cover (5) and is fastened to the cover (5), and at least one further spring element (14) associated with the backrest (2) extends along the backrest (2) in the region between the lower edge and the upper edge of the backrest (2), wherein the at least one further spring element (14) penetrates a backrest covering (4) disposed on the backrest (2) through an aperture in the backrest covering (4) and is fastened inside the backrest (2), wherein the at least one first spring element (13) is connected to the at least one further spring element (14) in the region of the lower edge (7) of the cover (5) between the backrest covering (4) and the cover (5) so that when an object to be stored in the pocket (6) is introduced into the pocket (6), the cover (5) is initially raised from the backrest (2) against the spring action of the at least one first spring element (13), wherein the cover (5) is pivoted about the axis of rotation (8) located in the region of the lower edge (7) of the cover (5) and the cover (5) braces against the backrest (2) in the region of the lower edge (7) of the cover (5), wherein during the further course of the opening process, the cover (5) is additionally raised from the backrest (2) against the spring action of the at least one further spring element (14) so that the axis of rotation (8) of the cover (5) is displaced and the distance of the axis of rotation (8) of the cover (5) is changed with respect to the backrest (2) and that the at least one first spring element (13) and the at least one further spring element (14) is a fully extended bending spring in each case.

2. Backrest (2) according to Claim 1, **characterized in that** the at least one further spring element (14) is of a cranked design so that it can penetrate the backrest covering (4).

## Revendications

1. Dossier (2) d'un siège de véhicule (1) comprenant une poche (6), la poche (6) étant formée par le dossier (2) et un couvercle (5), un axe de rotation (8) du couvercle (5) se trouvant dans la zone d'un bord inférieur (7) du couvercle (5), le couvercle (5) étant pivoté, lors d'une ouverture ou d'une fermeture de la poche (6), autour de l'axe de rotation (8),
l'axe de rotation (8) pouvant être déplacé au niveau de sa distance par rapport au dossier (2) de telle sorte qu'une compensation de la distance entre le couvercle (5) et le dossier (2) est effectuée lorsqu'un objet est conservé dans la poche (6),
**caractérisé en ce que**
le couvercle (5) interagit avec une pluralité d'éléments élastiques (13, 14), lesdits éléments élastiques (13, 14) étant disposés entre le couvercle (5) et le dossier (2), au moins un premier élément élastique (13) affecté au couvercle (5) s'étendant le long du couvercle (5) dans la zone entre le bord inférieur (7) du couvercle (5) et le bord supérieur du couvercle (5) et étant fixé sur le couvercle (5) et au moins un autre élément élastique (14) affecté au dossier (2) s'étendant le long du dossier (2) dans la zone entre le bord inférieur et le bord supérieur du dossier (2), l'au moins un autre élément élastique (14) pénétrant dans un recouvrement de dossier (4) disposé sur le dossier (2) à travers une ouverture dans le recouvrement de dossier (4) et étant fixé à l'intérieur du dossier (2), l'au moins un premier élément élastique (13) étant raccordé à l'au moins un autre élément élastique (14) dans la zone du bord inférieur (7) du couvercle (5) entre le recouvrement de dossier (4) et le couvercle (5) de telle sorte que lorsqu'un objet à ranger dans la poche (6) est introduit dans la poche (6), le couvercle (5) est d'abord soulevé du dossier (2) contre l'action élastique de l'au moins un premier élément élastique (13), le couvercle étant pivoté autour de l'axe de rotation (8) se trouvant dans la zone du bord inférieur (7) du couvercle et le couvercle prenant appui sur le dossier (2) dans la zone du bord inférieur (7) du couvercle, le couvercle (5) étant en outre, dans la suite du processus d'ouverture, soulevé du dossier (2) contre l'action élastique de l'au moins un autre élément élastique (14) de telle sorte que l'axe de rotation (8) du couvercle (5) est déplacé et la distance de l'axe de rotation (8) du couvercle (5) est modifié par rapport au dossier (2) et que l'au moins un premier élément élastique (13) et l'au moins un autre élément élastique (14) sont respectivement un ressort de flexion étiré.

2. Dossier (2) selon la revendication 1, **caractérisé en ce que** l'au moins un autre élément élastique (14) est conçu coudé de manière à pouvoir pénétrer dans le recouvrement de dossier (4).
